# EUROPÄISCHE PATENTANMELDUNG

(11) **EP 0 562 270 A1**
(43) Veröffentlichungstag der Anmeldung: **29.09.1993**
(21) Anmeldenummer: 93102523.3
(22) Anmeldetag: 18.02.1993
(51) Int. Cl.: A01C 17/00

(54) **Streugerät, insbesondere Schleuderdüngerstreuer**

(30) Priorität: 27.02.1992 DE 4206059; 25.03.1992 DE 4209589
(71) Anmelder: Amazonen-Werke H. Dreyer GmbH & Co. KG, D-49205 Hasbergen (DE)
(72) Erfinder: Dreyer, Heinz, Dipl.-Ing. Dr., W-4507 Hasbergen (DE); Scheufler, Bernd, Ing. Dr., W-4507 Hasbergen (DE)

(57) **Zusammenfassung**

Streugerät, insbesondere Schleuderdüngerstreuer, der einen trichterförmig ausgebildeten Vorratsbehälter (2) mit zumindest einer sich in den Vorratsbehälter (2) hineinerstreckenden und mit Rührelementen (14) ausgestatteten Rührwelle (12) aufweist, wobei die Rührwelle (12) von einem sich außerhalb des Vorratsbehälters (2) sich befindlichen Antriebsorgan angetrieben wird, und wobei zwischen der Rührwelle (12) und dem Antrieb (16) ein Bruchsicherungselement angeordnet ist. Um hier Abhilfe zu schaffen, ist vorgesehen, daß das Bruchsicherungselement sich außerhalb des Vorratsbehälters (2) befindet.

## Beschreibung

Die Erfindung betrifft ein Streugerät gemäß des Oberbegriffes des Patentanspruches 1.

Ein derartiges Streugerät ist durch die europäische Patentanmeldung 03 13 995 bekannt. Dieses als Schleuderdüngerstreuer ausgebildete Streugerät weist einen trichterförmig ausgebildeten Vorratsbehälter mit einer sich in den unteren Bereich des Vorratsbehälters hineinerstreckenden und mit Rührelementen ausgestatteten Rührwelle auf. Die Rührwelle wird von einem sich außerhalb des Vorratsbehälters befindlichen Antriebsorgan angetrieben. Zwischen der Rührwelle und dem Antrieb ist ein Bruchsicherungselement angeordnet. Durch dieses Bruchsicherungselement wird eine Beschädigung an der Rührwelle und den Rührelementen vermieden, wenn zwischen den Rührelementen und der Trichterwände harte Gegenstände eingeklemmt werden. Nachteilig bei dem bekannten Streugerät ist, daß das Bruchsicherungselement im Vorratsbehälter zwischen den Rührelementen und der Rührwelle angeordnet ist. Falls das als Abscherstift ausgebildete Bruchsicherungselement erneuert werden muß, wenn harte Fremdkörper zwischen den Rührelementen und den Trichterwänden eingeklemmt worden sind, muß in mühevoller Arbeit der Vorratsbehälter entleert werden, um das Bruchsicherungselement ersetzen zu können.

Der Erfindung liegt die Aufgabe zugrunde, hier Abhilfe zu schaffen.

Diese Aufgabe wird erfindungemäß dadurch gelöst, daß das Bruchsicherungselement sich außerhalb des Vorratsbehälters befindet. Infolge dieser Maßnahme ist das Bruchsicherungselement an einer gut zugänglichen Stelle der Maschine angeordnet. Insbesondere braucht der Vorratsbehälter nicht entleert zu werden, wenn das Bruchsicherungselement als Abscherelement ausgebildet ist und erneuert werden muß.

In einer anderen Ausführungsform ist das Bruchsicherungselement als Überlastkupplung, beispielsweise als Rutsch- oder Überratschkupplung ausgebildet. Infolge dieser Maßnahme ist es lediglich erforderlich, die sich zwischen dem Rührelement und der Vorratsbehälterwand eingeklemmten und das Rührorgan blockierenden Fremdkörper zu entfernen. Nach Entfernen dieser Fremdkörper ist die Rührwelle sofort wieder in gewohnter Weise antreibbar.

Wenn die Überlastkupplung zusätzlich als Abschaltkupplung ausgebildet ist, läßt sich bei einem Mehrscheibendüngerstreuer, wenn beispielsweise nur halbseitig gestreut werden soll, die den abgeschalteten Dosierorganen zugeordnete Rührwelle abschalten. Hierzu ist dann beispielsweise das Überratschelement der Überlastkupplung in einer Abschaltposition festsetzbar. Es ist auch möglich, zusätzlich zu dem Bruchsicherungselement eine Abschaltkupplung in dem Antrieb für die Rührwelle vorzusehen.

Um dem Schlepperfahrer sofort anzuzeigen, daß die Rührwelle still steht, ist vorgesehen, daß der Rührwelle eine Alarmeinrichtung zugeordnet ist, welche anzeigt, ob die Rührwelle sich dreht oder stillgesetzt ist.

Um auf einfache Weise eine Vorrichtung zu schaffen, welche die einwandfreie Funktion der Förder- und Rührelemente anzeigt, ist die im Kennzeichen des Anspruches 8 beschriebene Maßnahme vorgesehen.

Infolge dieser Maßnahme kann auf einfache Weise dem Betreiber der Maschine angezeigt werden, ob die Förder- und Rührelemente ihre Funktion verrichten.

In bevorzugter Weise ist erfindungemäß vorgesehen, daß das Bruchsicherungselement sich außerhalb des Vorratsbehälters befindet. Hierdurch ergibt sich eine einfache Anordnung der Überwachungs- und/oder Alarmeinrichtung, die somit außerhalb des Vorratsbehälters angeordnet werden kann. Auch wird durch diese Maßnahme erreicht, daß das Bruchsicherungselement an einer gut zugänglichen Stelle der Maschine angeordnet ist. Insbesondere braucht der Vortatsbehälter nicht entleert zu werden, wenn das Bruchsicherungselement als Abscherlement ausgebildet ist und erneuert werden muß. Weiterhin kann bei dieser Anordnung des Bruchsicherungselementes davon ausgegangen werden, daß, wenn die Rührwelle sich dreht, die Förder- und/oder Rührelemente einwandfrei arbeiten.

Als Bruchsicherungselemente können Überlastsicherungen, wie beispielsweise Abscherstifte, Abschersicherungen, Reibkupplungen, Nockenkupplungen etc. eingesetzt werden.

In einer Ausführungsform ist vorgesehen, daß eine mechanische Überwachungs- und/oder Alarmeinrichtung vorgesehen ist. Diese mechanische Überwachungs- und/oder Alarmeinrichtung kann beispielsweise entsprechend der Merkmale des Patentanspruches 3 ausgebildet sein.

Es ist jedoch auch möglich, eine elektrisch/elektronische Überwachungs- und/oder Alarmeinrichtung vorzusehen. In bevorzugter Weise ist eine aktive elektrische Einrichtung vorgesehen. Dies bedeutet, daß bei der in Funktion sich befindenden Rührwelle immer aktiv eine Lampe leuchtet.

Durch die aktive elektrische Einrichtung werden alle Störungen miterfaßt. Es werden hierdurch auch alle Fehler selbst in der elektrischen Anlage ausgeschaltet. Während des Betriebes ist also der Stromkreis der elektrischen Überwachungseinrichtung geschlossen.

Bei einem Streugerät, das mehrere Rührwellen oder Rührwellenabschnitte aufweist, welche über Bruchsicherungselemente mit dem Antriebsorgan kraftschlüssig verbunden sind, ist vorgesehen, daß jede Rührwelle oder jedem dem Rührwellenabschnitt eine Überwachungs- und/oder Alarmeinrichtung zugeordnet ist. Für jeden Rührwellenabschnitt kann auch jeweils eine eigene Anzeige vorgesehen sein. Bei einer Weiterbildung der Erfindung ist vorgesehen, daß das Bruchsicherungselement gleichzeitig als Abschalteinrichtung oder Element zum Abkuppeln der Rührwelle vom Antriebsorgan ausgebildet ist.

Weitere Einzelheiten der Erfindung sind der Beispielsbeschreibung und den Zeichnungen zu entnehmen. Hierbei zeigen
- Fig. 1: das Streugerät in der Ansicht von hinten und in Prinzipdarstellung,
- Fig. 2: das Bruchsicherungselement gemäß Fig. 1 in vergrößerter Darstellung,
- Fig. 3: ein weiteres als Überlastkupplung ausgebildetes Bruchsicherungselement in vergrößerter Darstellung,
- Fig. 4: die Überlastkupplung gemäß Fig. 3, wobei das Überratschelement in der Abschaltposition festgesetzt ist,
- Fig. 5: einen weiteren Schleuderdüngerstreuer in der Seitenansicht und in Prinzipdarstellung,
- Fig. 6: den Schleuderdüngerstreuer gemäß Fig. 5 in der Ansicht von hinten,
- Fig. 7: die Anordnung der Bruchsicherungselemente auf der Rührwelle in vergrößerter Darstellung, im Teilschnitt und in der Ansicht gemäß Fig. 6,
- Fig. 8: die Anordnung des Bruchsicherungselementes zwischen der Rührwelle und dem Antrieb in der Ansicht VIII - VIII,
- Fig. 9: ein anders ausgebildetes Bruchsicherungselement in der Ansicht gemäß Fig. 7,
- Fig. 10: die Anordnung des Bruchsicherungselementes gemäß Fig. 9 in der Ansicht VIII - VIII,
- Fig. 11: eine weitere Ausbildung der Überwachungs- und Alarmeinrichtung in gleicher Darstellungsweise wie in Fig. 10,
- Fig. 12: eine weitere Überwachungseinrichtung in der Darstellung gemäß Fig. 10 und
- Fig. 13: ein weiteres Bruchsicherungselement in der Ansicht gemäß Fig. 10.

Das als Schleuderdüngerstreuer ausgebildete Streugerät weist den Rahmen 1 auf, der auf in seiner in Fahrtrichtung gesehenen vorderen Seite mit den nicht näher dargestellten Kupplungselementen zum Anbau an den Dreipunktkraftheber eines Schleppers ausgestattet ist. An dem Rahmen 1 ist der trichterförmig ausgebildete Vorratsbehälter 2 befestigt, der das dachförmige Mittelteil 3 aufweist, wodurch der Vorratsbehälter 2 in die beiden trichterförmigen Behälterteile 4 und 5 unterteilt ist. Diese trichterförmigen Behälterteile 4 weisen jeweils auf ihrer Unterseite das aus einer Bodenplatte 6, die eine Auslauföffnung aufweist, und Schieber 7 bestehende Dosierorgan 8 auf. Unterhalb dieses Dosierorganes 8 ist jeweils eine rotierend angetriebene Schleuderscheibe 9 mit darauf angeordneten Wurfschaufeln 10 angeordnet. Die Schleuderscheiben 9 werden über einen bekannten und daher nicht näher dargestellten Antrieb angetrieben.

Unter dem dachförmigen Mittelteil 3 befindet sich der Antriebsschacht 11 für die Rührwelle 12. Die horizontal und quer zur Fahrtrichtung angeordnete Rührwelle 12 wird in bekannter und nicht näher dargestellter Weise angetrieben. In die unteren Bereiche der trichterförmigen Behälterteile 4 und 5 ragt jeweils eine Rührwelle 12. Die Rührwelle 12 ist mittels der Lagerbuchse 13, die an den dachförmigen Mittelteil jeweils befestigt ist, gelagert. Auf der Rührwelle 12 sind im Vorratsbehälter 2 die Rührelemente 14 angeordnet. Zwischen der im Antriebsschacht 11 mittels der Lager 15 gelagerten Antriebswelle 15 und der Rührwelle 12 ist eine Verbindungshülse 17 angeordnet. Die Verbindungshülse 17 ist jeweils mit der Rührwelle 12 und der Antriebswelle 16 durch die Abscherstifte 18 miteinander verbunden. Wenn sich ein Fremdkörper zwischen der Vorratsbehälterwand und den Rührelementen 14 festsetzt, schert das als Abscherelement 18 ausgebildete Bruchsicherungselement ab und die Rührwelle 12 kommt zum Stillstand. Nach Entfernen des Fremdkörpers muß ein neuer Abscherstift 18 eingesetzt werden und die Maschine ist dann wieder einsatzfähig. Um feststellen zu können, ob die Rührwelle 12 sich dreht oder stillsteht, ist im Bereich der Rührwelle 12 an dem dachförmigen Mittelteil 3 jeweils ein Sensor 19 angeordnet, der über das Kabel 20 mit einer nicht dargestellten Alarmeinrichtung verbunden ist, welche anzeigt, ob die Rührwelle 12 sich dreht oder stillsteht.

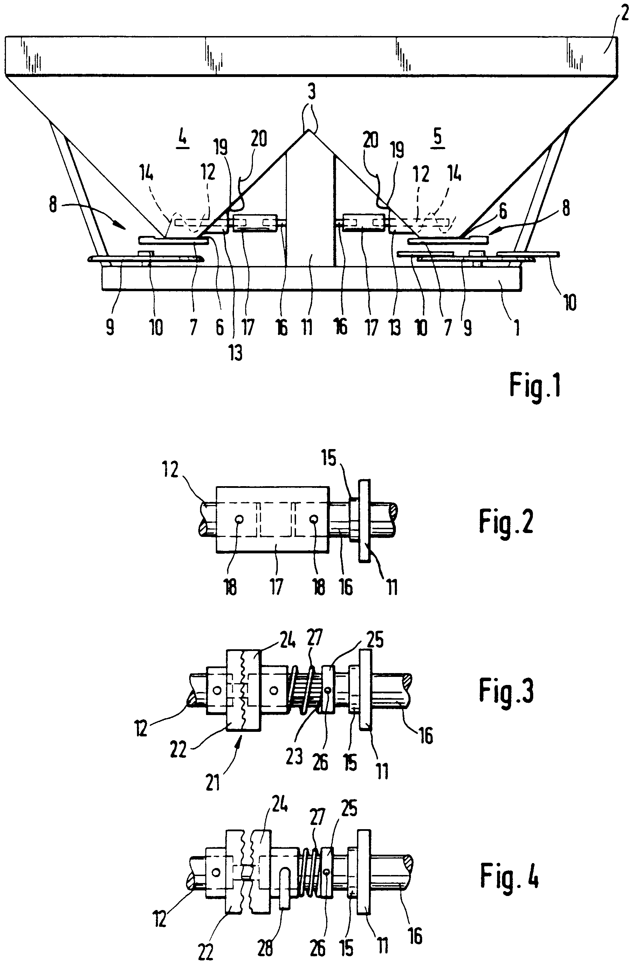

Anstelle des in Fig. 1 und Fig. 2 dargestellten als Abscherelement ausgebildeten Bruchsicherungselementes kann auch die in den Fig. 3 und 4 dargestellte Überlastkupplung 21 angeordnet werden. Diese Überlastkupplung 21 ist als Rutsch- oder Überratschkupplung ausgebildet. Hierzu ist auf der Rührwelle 12 das eine sternförmige Stirnverzahnung aufweisende Kupplungselement 22 aufgesetzt. Die Antriebswelle 16 weist eine formschlüssige Verbindung, beispielsweise ein Keilprofil 23 auf. Auf diesem Keilprofil 23 der Welle 16 ist das Überratschelement 24 der Überlastkupplung 21 verschiebbar angeordnet. Dieses Überratschelement weist ebenfalls eine sternförmige Stirnverzahnung auf. In der in Fig. 3 dargestellten Position ist das Überratschelement 24 formschlüssig mit dem Kupplungselement 22 verbunden ist. Auf der Welle 16 ist der Ring 25 mit dem Stift 26 angeordnet. Zwischen dem Ring 25 und dem Überratschelement 24 befindet sich eine Feder 27, welche das Überratschelement 24 gegen das Kupplungsstück 22 drückt. Wenn nun ein Fremdkörper zwischen dem Rührelement 14 und der Vorratsbehälterwand gerät, ratscht das Überratschelement 24 über das Kupplungselement 22 über und die Rührwelle 12 steht sill.

Um die Rührwelle 12 abzuschalten kann das Überratschelement 24 gegen die Kraft der Feder 27 in die in Fig. 4 dargestelle Position gebracht werden und mittels eines Stiftes 28 in der in Fig. 4 dargestellten Position festgesetzt werden. Das Überratschelement 24 der Überlastkupplung 21 befindet sich dann in der Abschaltposition.

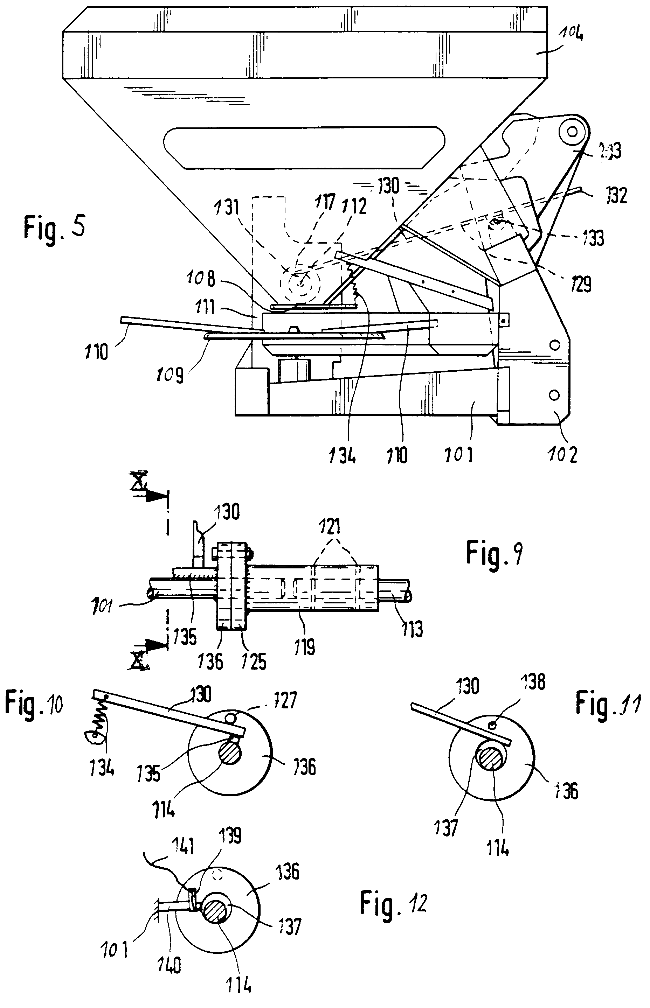

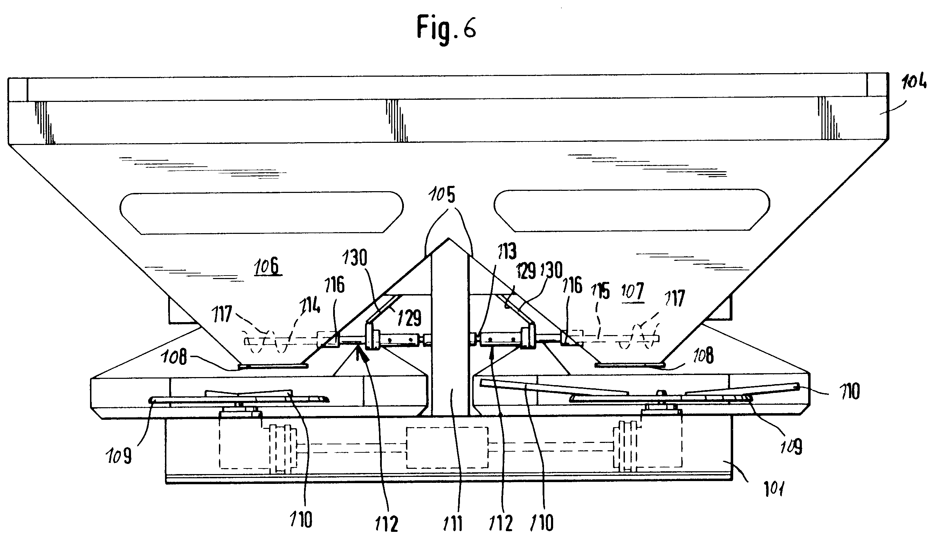

Das als Schleuderdüngerstreuer ausgebildete Streugerät gemäß Fig. 5 weist den Rahmen 101 auf, der auf seiner in Fahrrichtung gesehenen vorderen Seite mit den beiden unteren Kupplungselementen 102 und dem oberen Kupplungselement 103 zum Anbau an den Dreipunktkraftheber eines Schleppers ausgestattet ist. An dem Rahmen 101 ist der trichterförmig ausgebildete Vorratsbehälter 104 befestigt, der das dachförmige Mittelteil 105 aufweist, wodurch der Vorratsbehälter 104 in die beiden trichterförmigen Behälterteile 106 und 107 unterteilt ist. Dieser trichterförmigen Behälterteile 106 und 107 weisen jeweils auf ihrer Unterseite das aus einer Bodenplatte, die eine Auslauföffnung aufweist, und einem Schieber bestehende Dosierorgan 108 auf. Unterhalb dieses Dosierorganes 108 ist jeweils eine rotierend angetriebene Schleuderschiebe 109 mit darauf angeordneten Wurfschaufeln 110 angeordnet. Die Schleuderscheiben 109 werden über einen bekannten und daher nicht näher dargestellten Antrieb von der Zapfwelle des Schleppers über eine Gelenkwelle angetrieben.

Unter dem dachförmigen Mittelteil 105 befindet sich der Antriebsschacht 111 für die Rührwelle 112. Die horizonale und quer zur Fahrtrichtung angeordnete Rührwelle 112 wird über den sich in dem Antriebsschacht 111 befindlichen Antrieb in bekannter und daher nicht näher dargestellter Weise angetrieben. Die Rührwelle 112 ist in die drei Wellenabschnitte 113,114 und 115 unterteilt. Der mittlere Wellenabschnitt 113 ist mit dem sich in dem Antriebsschacht 111 befindlichen Antrieb kraftschlüssig verbunden. Die beiden Rührwellenabschnitte 114 und 115 ragen in die unteren Bereiche der trichterförmigen Behälterteile 106 und 107. Die Rührwellenabschnitte 114 und 115 sind jeweils mittels eines Lagers 116, die an dem dachförmigen Mittelteil 105 befestigt sind, gelagert. Auf den Rührwellenabschnitten 114 und 115 sind im Vorratsbehälter 104 jeweils die Rühr- und/oder Förderelemente 117 angeordnet. Der mittelere Rührwellenabschnitt 113 ist mittels eines Lagers 118 am Antriebsschacht 111 gelagert. Über die Rührwellenabschnitte 114,115 und den Antriebswellenabschnitt 113 ist jeweils die Hülse 119 geschoben. In den Hülsen 119 und den Antriebswellenabschnitt 113 befinden sich jeweils zwei miteinander korrespondierende Bohrungen 120, durch welche jeweils ein Verbindungsstift 121 gesteckt ist. Die Rührwellenabschnitte 114 und 115 sind im Bereich der Hülse 119 mit einem geringeren Durchmesser versehen. Auf diesem Abschnitt 122 mit dem geringeren Durchmesser ist jeweils eine Lagerbuchse 123 aufgeschoben. Die Hülse 119 weist an ihrem dem Rührwellenabschnitt 114,115 zugewandten Ende 124 die ringförmige Scheibe 125 auf. Auf dem jeweiligen Rührwellenabschnitt 114,115 ist die Exzenterscheibe 126 jeweils drehfest auf dem Rührwellenabschnitt 114,115 angeordnet. Beispielsweise kann die Exzenterscheibe 126 mit dem Rührwellenabschnitt 114,115 verschweißt sein. Die Exzenterscheibe 126 und die ringförmige Scheibe 125 weisen jeweils eine korrespondierende Bohrung auf, durch welche die Abscherschraube 127 gesteckt ist. Die Abscherschraube 127 bildet das Bruchsicherungselement. Wenn beispielsweise zwischen den Förder- und/oder Rührelementen 117 und der Vorratsbehälterwand ein unzerdrückbarer Gegenstand gerät und die Rührwelle 112 blockiert, schert die Abscherschraube 127 ab. Der jeweilige Rührwellenabschnitt 114 oder 115 bleibt dann stehen.

In der Exzenterscheibe 126 sind zwei weitere Bohrungen 128 angebracht, in welche beispielsweise Ersatzabscherscheiben vorrätig mitgeführt werden können.

Um ständig während des Betriebes überwachen zu können, ob die Rührwelle sich dreht oder stillsteht, ist jedem Rührwellenabschnitt 114,115 eine Überwachungs- und Alarmeinrichtung 129 zugeordnet, die im Ausführunsbeispiel gemäß den Fig. 5 bis 8 mechanisch ausgebildet ist.

Wie bereits erwähnt, ist jedem Rührwellenabschnitt 114,115 die Exzenterscheibe 126 zugeordnet. Weiterhin ist jedem Rührwellenabschnitt 114,115 bzw. jeder Exzenterscheibe 126 der zweiarmige, bewegbar gelagerte Anzeigehebel 130 zugeordnet. Der Hebel 130 kommt mit seinem einen Endbereich 131 an dem Exzenterelement 126 der Rührwellenabschnitte 114,115 zur Anlage, während das andere Ende 132 des Hebels 130 sich im vorderen Bereich des Streugerätes befindet und vom Schleppersitz aus eingesehen werden kann. Der Hebel 130 ist mit dem Bolzen 133 am Rahmen 101 des Streugerätes beweglich gelagert. Weiterhin ist jedem Hebel 130 eine Feder 134 zugeordnet. Diese Feder 134 ist zwischen dem Rahmen 101 und dem Hebel 130 angeordnet. Weiterhin zieht diese Feder 134 den jeweiligen Hebel 130 gegen das jeweilige Exzenterelement 126 der Rührwelle 112. Wenn die Rührwellenabschnitte 114, 115 sich drehen, bewegen sich die Hebel 130, hin und her angetrieben durch das jeweilige Exzenterelement 126, auf und ab. Solange das jeweilige Bruchsicherungselement 127 nicht abgeschert ist, wird der jeweilige Rührwellenabschnitt 114,115 mit dem Förder- und Rührelement 117 von dem Antriebswellenabschnitt 113 angetrieben. Ist das Bruchsicherungselement 127 abgeschert, so daß der Rührwellenabschnitt 114,115 stillsteht, bewegt sich auch der diesem Rührwellenabschnitt 114,115 zugeordnete Hebel 130 nicht mehr auf und ab. Dieses ist für den Betreiber der Maschine der eindeutige Hinweis, daß das der zugeordneten Rührwellenabschnitt 114,115 stillsteht und die Ursache für die Unterbrechung des Rührwellenantriebes behoben werden muß. Wenn die Ursache behoben worden ist, muß ein neues Abscherelement 127 eingesetzt werden.

Die Ausbildung der Überwachungs- und Alarmeinrichtung gemäß den Fig. 9 und 10 unterscheidet sich von dem Ausführungsbeispiel gemäß den Fig. 5 bis 8 durch die andere Ausbildung des Exzenterelementes. Gemäß dem Ausführungsbeispiel nach den Fig. 9 und 10 ist das Betätigungselement 135 für den Hebel 130 als einfaches Erhöhungselement auf dem Rührwellenabschnitt 114 neben der mit dem Rührwellenabschnitt 114 fest verbundenen Ringscheibe 136 angeordnet.

Gemäß dem Ausführungsbeispiel nach Fig. 11 ist das Exzenterelement 137 neben der die Abscherbohrung 138 aufweisenden Ringscheibe 136 angeordnet, an welchem der Hebel 130 zur Anlage kommt.

Gemäß dem Ausführungsbeispiel nach Fig. 12 ist die Überwachungs- und/oder Alarmeinrichtung elektrisch/elektronisch ausgebildet. Hierzu ist ein Schalter 139 vorgesehen, der über ein Verbindungselement 140 mit dem Rahmen 101 verbunden ist. Der Schalter 139 steht mit dem der Rührwelle zugeordneten Exzenterelement 137 in Verbindung. Durch das Exzenterelement 137 wird der Schalter 139, wenn der zugeordnete Rührwellenabschnitt 114,115 sich dreht, fortlaufend intermittierend betätigt. Über das Kabel 141 ist der Schalter mit einer nicht dargestellten Anzeigevorrichtung, die beispielsweise eine Lampe aufweist, verbunden. Durch die intermittierende Betätigung des Schalters 139, wird die Lampe zum Blinken gebracht. Solange die Lampe blinkt, dreht der zugeordnete Rührwellenabschnitt 114,115 sich. Sobald die Lampe aufhört zu Blinken, ist der Antrieb zwischen dem Antriebswellenabschnitt 113 und dem jeweiligen Rührwellenabschnitt 114,115 unterbrochen.

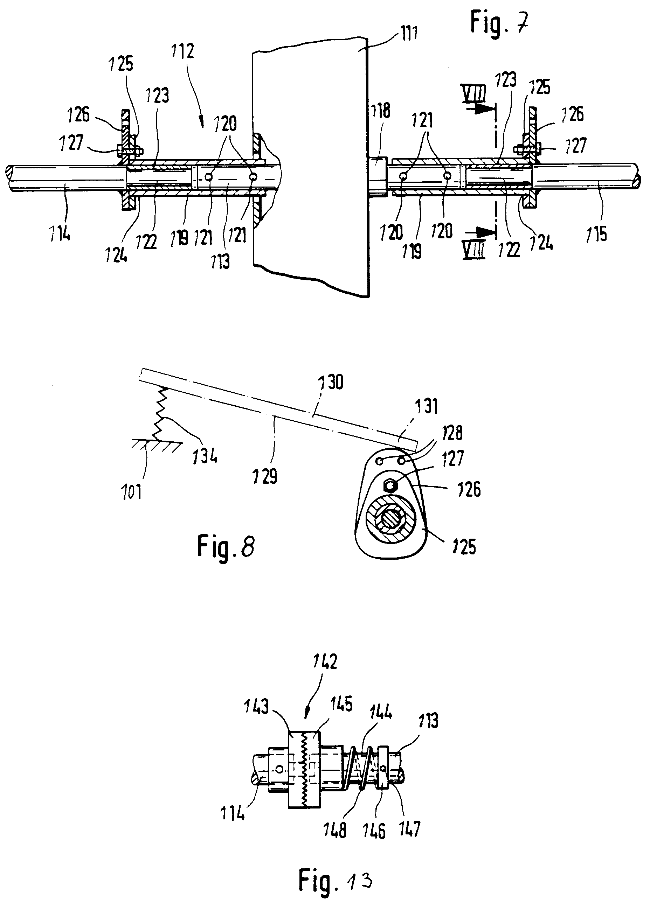

Anstelle des in den Fig. 5 bis 8 dargestellten, als Abscherelement ausgebildeten Bruchsicherungselementes kann auch die in Fig. 13 dargestellte Überlastkupplung 142 zwischen dem Antriebswellenabschnitt 113 und den Rührwellenabschnitten 114,115 angeordnet werden. Diese Überlastkupplung 142 ist als Rutsch- oder Überratschkupplung ausgebildet. Hierzu ist auf dem Rührwellenabschnitt 114,115 das die sternförmige Stirnverzahnung aufweisende Kupplungselement 143 kraftschlüssig aufgesetzt. Der Antriebswellenabschnitt 113 weist eine förmschlüssige Verbindung, beispielweise ein Keilprofil 144 auf. Auf diesem Keilprofil 144 des Antriebswellenabschnittes 113 ist das Überratschelement 145 der Überlastkupplung 142 verschiebbar angeordnet. Dieses Überratschelement 145 weist ebenfalls eine sternförmige Stirnverzahnung auf. Auf dem Antriebswellenabschnitt 113 ist der Ring 146 mit den Stift 147 angeordnet. Zwischen dem Ring 146 und dem Überratschelement 145 befindet sich eine Feder 148, welches das Überratschelement 145 gegen das Kupplungstück 143 drückt. Hierdurch ist die Antriebsverbindung zwischen dem Antriebswellenabschnitt 113 und dem jeweiligen Rührwellenabschnitt 114,115 hergestellt. Wenn nun ein Fremdkörper zwischen dem Rührelement 117 und der Vorratsbehälterwand gerät, ratscht das Überratschelement 145 über das Kupplungselement 143 über und der entsprechende Rührwellenabschnitt 114,115 steht still. Den Rührwellenabschnitten 114,115 ist eine der in den vorherigen Ausführungsbeispielen beschriebene Überwachungs- und/oder Alarmeinrichtungen zugeorndet, um zu Überwachen, ob der jeweilige Rührwellenabschnitt 114, 115 sich dreht oder stillsteht.

Es ist auch möglich die Rührwellenabschnitte 114,115 absichtlich stillzusetzen, wenn dieses die Ausbringung des Düngers erfordert. Hierzu muß dann das Bruchsicherungs -oder Überlastelement zwischen dem Antriebswellenabschnitt 113 und dem jeweiligen Rührwellenabschnitt 114,115 entfernt werden.

## Patentansprüche

1. Streugerät, insbesondere Schleuderdüngerstreuer, der einen trichterförmig ausgebildeten Vorratsbehälter (2) mit zumindest einer sich in den Vorratsbehälter (2) hineinerstreckenden und mit Rührelementen (14) ausgestatteten Rührwelle (12) aufweist, wobei die Rührwelle (12) von einem sich außerhalb des Vorratsbehälters (2) sich befindlichen Antriebsorgan angetrieben wird, und wobei zwischen der Rührwelle (12) und dem Antrieb (16) ein Bruchsicherungselement (18,21) angeordnet ist, dadurch gekennzeichnet, daß das Bruchsicherungselement (18,21) sich außerhalb des Vorratsbehälters (2) befindet.

2. Streugerät nach Anspruch 1, dadurch gekennzeichnet, daß das Bruchsicherungselement als Abscherelement (18) ausgebildet ist.

3. Streugerät nach Anspruch 1, dadurch gekennzeichnet, daß das Bruchsicherungselement als Überlastkupplung (21), beispielsweise als Rutsch- oder Überratschkupplung ausgebildet ist.

4. Streugerät nach einem oder mehreren der vorstehenden Ansprüche, dadurch gekennzeichnet, daß die Überlastkupplung (21) als Abschaltkupplung ausgebildet ist.

5. Streugerät nach einem oder mehreren der vorstehenden Ansprüche, dadurch gekennzeichnet, daß zusätzlich zu dem Bruchsicherungelement eine Abschaltkupplung (21) in dem Antrieb für die Rührwelle (12) vorgesehen ist.

6. Streugerät nach einem oder mehreren der vorstehenden Ansprüche, dadurch gekennzeichnet, daß das Überratschelement (21) der Überlastkupplung in einer Abschaltposition festsetzbar ist.

7. Streugerät nach einem oder mehreren der vorstehenden Ansprüche, dadurch gekennzeichnet, daß der Rührwelle (12) eine Alarmeinrichtung (19) zugeordnet ist, welche anzeigt, ob die Rührwelle (12) sich dreht oder stillgesetzt ist.

8. Streugerät, insbesondere Schleuderdüngerstreuer, der einen trichterförmig ausgebildeten Vorratsbehälter mit zumindest einer sich in den Vorratsbehälter hineinerstreckenden und mit Förder- und/oder Rührelementen ausgestatteten Rührwelle aufweist, wobei die Rührwelle von einem sich außerhalb des Vorratsbehälters sich befindlichen Antriebsorgan angetrieben wird, wobei zwischen der Rührwelle und dem Antriebsorgan ein Bruchsicherungselement und/oder eine Überlastkupplung, wie beispielsweise Abscherstift, Abschersicherung, Reibkupplung, Nockenschaltung etc., angeordnet ist, dadurch gekennzeichnet, daß der Rührwelle (12,112) eine Überwachungs- und/oder Alarmeinrichtung zugeordnet ist, welche anzeigt, ob die Rührwelle (12,14,15,112,114,115) sich dreht oder stillsteht.

9. Streugerät nach Anspruch 1, dadurch gekennzeichnet, daß eine mechanische Überwachungs- und/oder Alarmeinrichtung (129) vorgesehen ist.

10. Streugerät nach Anspruch 2, dadurch gekennzeichnet, daß der (den) Rühwelle(n) (12,14,15,112,114,115) zumindest ein Exzenterelement (126,135,137) zugeordnet ist, daß ein zweiarmiger, bewegbar gelagerter Anzeigehebel (130) vorgesehen ist, daß der Hebel (130) mit seinem einen Endbereich (131) an der Rührwelle (112,114,115) im Bereich des Exzenterelementes (126,135,137) zur Anlage kommt, daß das andere Ende (132) des Hebels (130) sich im vorderen Bereich des Streugerätes befindet.

11. Streugerät nach Anspruch 3, dadurch gekennzeichnet, daß der Hebel (130) mit einem Bolzen (133) am Rahmen (101) des Streugerätes beweglich gelagert ist.

12. Streugerät nach Anspruch 3, dadurch gekennzeichnet, daß dem Hebel (130) eine Feder (134) zugeordnet ist, welche den Hebel (130) gegen die Rührwelle (112,114,115) zur Anlage bringt.

13. Streugerät nach Anspruch 1, dadurch gekennzeichnet, daß eine elektrisch/elektronische Überwachungs- und/oder Alarmeinrichtung (139) vorgesehen ist.

14. Streugerät nach Anspruch 6, dadurch gekennzeichnet, daß eine aktive elektrische Einrichtung (139) vorgesehen ist.

15. Streugerät nach einem oder mehreren der vorstehenden Ansprüche, wobei das Streugerät mehrere Rührwellen oder Rührwellenabschnitte aufweist, die über das Bruchsicherungselement mit dem Antriebsorgan kraftschlüssig verbunden sind, dadurch gekennzeichnet, daß jeder (112) Rührwelle oder jedem Rührwellenabschnitt (114,115) eine Überwachungs- und/oder Alarmeinrichtung zugeordnet ist.

16. Streugerät nach einem oder mehreren der vorstehenden Ansprüche, dadurch gekennzeichnet, daß das Bruchsicherungselement (127,142) sich außerhalb des Vorratsbehälters (104) befindet.

17. Streugerät nach einem oder mehreren der vorstehenden Ansprüche, dadurch gekennzeichnet, daß das Bruchsicherungselement als Abscherelement (127) und gleichzeitig als Abschalteinrichtung oder -element zum Abkuppeln der Rührwelle (114,115) vom Antriebsorgan (113) ausgebildet ist.

18. Streugerät nach einem oder mehreren der vorstehenden Ansprüche, dadurch gekennzeichnet, daß das Bruchsicherungselement als Überlastkupplung, beispielsweise als Rutsch- oder Überratschkupplung ausgebildet ist.
